# EUROPÄISCHE PATENTANMELDUNG

(11) **EP 3 184 601 A1**
(43) Veröffentlichungstag der Anmeldung: **28.06.2017**
(21) Anmeldenummer: 15202340.4
(22) Anmeldetag: 23.12.2015
(51) Int. Cl.: C09K 8/035, A01N 37/00, C09K 8/60, F24J 3/08

(54) **PROZESSFLUID MIT UMWELTVERTRÄGLICHEM BIOSTABILISATOR**

(71) Anmelder: Agrana Beteiligungs- Aktiengesellschaft, 1020 Wien (AT)
(72) Erfinder: Die Erfindernennung liegt noch nicht vor
(74) Vertreter: Sonn & Partner Patentanwälte

(57) **Zusammenfassung**

Die vorliegende Erfindung betrifft die Verwendung eines Prozessfluids mit einem umweltverträglichen Biostabilisator in einer geothermischen Bohrung. Der Biostabilisator ist dadurch gekennzeichnet, dass er mindestens eine organische Säure, oder ein Salz, Alkohol oder Aldehyd davon, umfasst, wobei die mindestens eine organische Säure ausgewählt ist aus der Gruppe bestehend aus Hopfensäuren, Harzsäuren, Fettsäuren und Gemischen davon. Bevorzugt ist der Biostabilisator ein Gemisch aus Hopfenextrakt, Kolophonium und Myristinsäure. Ferner betrifft die vorliegende Erfindung diesbezügliche Prozessfluide und Herstellungsverfahren dafür.

## Beschreibung

Die Erfindung betrifft die Verwendung eines Prozessfluids in einer geothermischen Bohrung, wobei das Prozessfluid einen Biostabilisator umfasst.

Geothermie bezeichnet die technische Nutzung der Erdwärme. Erdwärme ist die in der Erdkruste gespeicherte Wärme und zählt zu den erneuerbaren Energiequellen. Sie kann sowohl direkt genutzt werden (z.B. über eine Wärmepumpe) als auch indirekt (z.B. zur Erzeugung von elektrischem Strom). Man unterscheidet zwischen oberflächennaher Geothermie (mit Bohrungen bis zu einer Bohrtiefe von 400 Metern) und Tiefengeothermie (mit Bohrtiefen ab 400 Metern und üblicherweise bis zu 4000 Metern oder 5000 Metern). Eine Bohrung zum Erschließen einer geothermischen Lagerstätte wird als geothermische Bohrung bezeichnet. In Niederenthalpie-Erdwärmelagerstätten, wie sie beispielsweise im alpinen Raum verfügbar sind, sind in der Regel tiefe geothermische Bohrungen erforderlich. Übrigens fällt das geothermische Bohrverfahren (zur Erzeugung einer geothermischen Bohrung) unter den Begriff der Geothermie, wie er hierin verwendet wird bzw., wenn die Bohrtiefe tiefer als 400 Meter ist, auch unter den Begriff der Tiefengeothermie, wie er hierin verwendet wird. In der Geothermie werden - üblicherweise wasserhältige - Prozessfluide (d.h. Fluide, die in einem Prozess bzw. Verfahren eingesetzt werden und in der Regel dabei nicht verbraucht werden) eingesetzt, beispielsweise als Bohrspülung beim Erschließen der geothermischen Lagerstätte oder als Wärmeträger während des Betriebs (d.h. der Ausbeutung oder Nutzung) der geothermischen Lagerstätte.

In der Geothermie stellt das Hot-Dry-Rock-Verfahren (auch bekannt als "Enhanced Geothermal System" oder "Hot Fractured Rock") eine Besonderheit dar. Bei diesem Verfahren wird ein Prozessfluid (in der Regel auf wässriger Basis) zwischen mindestens zwei benachbarten geothermischen Bohrungen zirkuliert. Während des Betriebes wird der geothermischen Lagerstätte (d.h. der geologischen Formation) durch eine erste geothermische Bohrung kälteres Prozessfluid zugeführt und an einer zweiten geothermischen Bohrung, evtl. angereichert durch natürlich vorhandene Tiefenwässer, erwärmt wieder entnommen. Durch das Einpressen von Prozessfluid mit hohem Druck (üblicherweise bis zu 150 bar) weiten sich die in der geologischen Formation vorhandenen Risse, und unter Umständen bilden sich neue aus, wodurch sich die Oberfläche zum Wärmeaustausch zwischen Fluid und Formation massiv erhöht. Anders als z.B. beim Hydraulic Fracturing in der Erdöl- oder Erdgasförderung üblich, sind hierfür oft keine Stützmittel ("Proppants") erforderlich, um die Risse offen zu halten, weil der hohe Druck während des Betriebes aufrechterhalten wird.

Bei geothermischen Bohrverfahren ist typischerweise das Einpumpen einer Bohrspülung in die geothermische Bohrung erforderlich. Die Bohrspülung (ein Prozessfluid) ist in der Regel eine Suspension von gemahlenem Bentonit in Wasser mit weiteren Zusätzen. Die Bohrspülung wird in der Regel in einem Kreislauf geführt. Unter anderem dient sie üblicherweise zur Stabilisierung der Bohrung, zum Austrag des Bohrkleins und dem Abführen der vom Bohrwerkzeug verursachten Reibungswärme.

Das Innere der Erdkruste ist besiedelt bzw. besiedelbar von unzähligen Arten von Mikroorganismen, sowohl im Erdboden als auch in darunter liegenden geologischen Formationen. Viele dieser Mikroorganismen können durch ihr Wachstum bzw. ihren Stoffwechsel die Geothermie, vor allem die Tiefengeothermie, und insbesondere das geothermische Bohrverfahren erschweren oder gar verunmöglichen; d.h. es handelt sich dabei um "unerwünschte Mikroorganismen". Beispielsweise können unerwünschte Mikroorganismen durch ihre Stoffwechselprodukte die Korrosion von Leitungsrohren und anderer Ausrüstung aus Metall begünstigen und durch Schleimbildung (d.h. Bildung extrazellulärer polymerer Substanzen) bzw. Bewuchs ("Biofilme") Leitungen verstopfen. Dies wird auch als "Biofouling" bezeichnet. Außerdem können sich unerwünschte Mikroorganismen in einem Prozessfluid ohne Biostabilisator anreichern und Ökosysteme bzw. den Menschen gefährden, wenn jenes Prozessfluid aus der kontrollierten Umgebung in die Umwelt (z.B. ins Grundwasser) austreten sollte.

Aus diesen und anderen Gründen werden oft Biozide oder Biostabilisatoren (auch Biostate oder Biostatika genannt) gegen unerwünschte Mikroorganismen eingesetzt.

Üblicherweise werden in der Geothermie, vor allem in der Tiefengeothermie, und insbesondere in geothermische Bohrverfahren, aggressive Biozide wie beispielsweise Glutaraldehyd oder Triazin-Derivate verwendet, welche schädlich für Mensch und Umwelt sind, insbesondere besteht die Gefahr einer Grundwasserkontamination durch die aggressiven Biozide. Jenes Problem ist erkannt worden, so beschreiben z.B. Ashraf et al. umweltverträgliche Biozide ("green biocides") im Allgemeinen.

Allerdings weisen solche alternativen Biozide im Stand der Technik einen oder mehrere Nachteile auf, beispielsweise: höhere Kosten, geringere Wirksamkeit, insbesondere unter den Bedingungen, die in der Erdkruste herrschen können (z.B. höhere Temperaturen), und bei vielen, insbesondere thermophilen Mikroorganismen, und Komplexität in der Anwendung). Außerdem handelt es sich dabei größtenteils immer noch um Biozide und nicht um Biostabilisatoren, was ungeklärte Auswirkungen auf Ökosysteme haben kann. Des Weiteren ist es vorteilhaft, möglichst viele verschiedene, insbesondere auch umweltverträgliche, Biozide bzw. Biostabilisatoren zur Verfügung zu haben, um insgesamt ein möglichst breites Wirkungsspektrum gegen die unzähligen Arten von unerwünschten Mikroorganismen zu erlangen. Das Thema der Umweltverträglichkeit ist vor allem in Europa von besonderer Bedeutung, eigentlich sogar Voraussetzung für die weitere Etablierung von Geothermie, insbesondere der Tiefengeothermie,. Es wird weiters vermutet, dass die Wirksamkeit von bisher verwendeten Bioziden z.B. auch durch die mitunter auftretenden hohen Salzkonzentrationen verringert wird, wenn beispielsweise ein Prozessfluid beim Einsatz in der Erdkruste Salze aus der Erdkruste löst.

Aus diesen und weiteren Gründen ist eine Aufgabe der vorliegenden Erfindung, ein Prozessfluid mit einem umweltverträglichen Biostabilisator für die Geothermie (insbesondere für die Tiefengeothermie), d.h. in einer geothermischen Bohrung, und vor allem für das geothermische Bohrverfahren, d.h. in diesem Fall als Bohrspülung, zur Verfügung zu stellen, sowie ein diesbezügliches Herstellungsverfahren und ein diesbezügliches Verwendungsverfahren. Insbesondere soll dieser Biostabilisator wirksam gegen ausgewählte unerwünschte mesophile oder thermophile Mikroorganismen sein; vor allem solche, die von derzeit eingesetzten Bioziden nur unzureichend am Wachstum oder Stoffwechsel gehindert werden. Im Besonderen soll dieser Biostabilisator bei einer Umweltbedingung, die in der Erdkruste, insbesondere in geothermisch nutzbaren geologischen Formationen, herrscht, wirksam sein. Des Weiteren soll dieser Biostabilisator möglichst einfach und kostengünstig hergestellt und eingesetzt werden können, weil der großtechnische Einsatz in der Geothermie dies so erfordert.

Folglich betrifft die vorliegende Erfindung ein Prozessfluid für eine geothermische Bohrung (bzw. die Verwendung des Prozessfluids in einer geothermischen Bohrung). Das Prozessfluid der Erfindung umfasst einen Biostabilisator und ist dadurch gekennzeichnet, dass der Biostabilisator mindestens eine organische Säure, oder ein Salz, Alkohol oder Aldehyd davon, umfasst, wobei die mindestens eine organische Säure ausgewählt ist der Gruppe bestehend aus Hopfensäuren, Harzsäuren, Fettsäuren und Gemischen davon.

Überraschenderweise haben sich diese organischen Säuren bei der Geothermie, insbesondere bei der Tiefengeothermie, als besonders geeignet zur Biostabilisierung herausgestellt.

So sind diese organischen Säuren insbesondere auch bei höheren Temperaturen, wie sie beispielsweise in geologischen Formationen einer Tiefe von 1 km-5 km herrschen können, wirksam und zwar auch gegen ausgewählte unerwünschte mesophile oder thermophile Mikroorganismen, die in dieser Umgebung vorkommen bzw. wachsen können.

Diese organischen Säuren können besonders einfach und kostengünstig zugegeben werden, um das erfindungsgemäße Prozessfluid zu erhalten - beispielsweise können Hopfensäuren in Form eines Hopfenextrakts und ausgewählte Harzsäuren in Form eines natürlichen Harzes, insbesondere Kolophonium, - vorzugsweise eine alkalische Lösung ausgewählter Harzsäuren in Form eines natürlichen Harzes, insbesondere Kolophonium - zugegeben werden.

Die besagten organischen Säuren haben sich bereits in der Lebensmittelherstellung als biostabilisierend bewährt, wie unter anderem in den Dokumenten WO 00/053814 A1, WO 01/88205 A1, WO 2004/081236 A1 und WO 2008/067578 A1 beschrieben. Der Einsatz in der Geothermie oder gar der Einsatz in der Tiefengeothermie wird in jenen Dokumenten jedoch nicht nahegelegt. Im Einsatz in der Lebensmittelherstellung haben sich diese organischen Säuren als verträglich für Mensch und Umwelt herausgestellt.

In Emerstorfer et al. wurde die minimale Hemmkonzentration von Hopfen-ß-Säuren, Harzsäuren und einer Mischung aus Harzsäuren und Myristinsäure gegen verschiedene Bakterien, Hefen und Schimmelpilze untersucht und mit der Wirkung von Kalilauge und Wasserstoffperoxid verglichen. Der Einsatz in der Geothermie oder gar der Tiefengeothermie wird in jenem Dokument jedoch nicht nahegelegt.

Zwar nennen auch Wang et al. Harzsäurederivate als antimikrobielle Stoffe, aber der Einsatz in der Geothermie oder gar der Einsatz in der Erdkruste bei den schwierigen Bedingungen die in der Tiefengeothermie herrschen, wird in jenem Dokument ebenfalls nicht nahegelegt.

Der Einsatz in der Geothermie bedingt den Einsatz von großen Mengen (Volumina) des erfindungsgemäßen Prozessfluids. Bevorzugt wird das erfindungsgemäße Prozessfluid folglich in einer Menge von mindestens 10⁴ L, bevorzugt mindestens 10⁵ L, insbesondere mindestens 10⁶ L bereitgestellt. Zum Beispiel wird bei einem geothermischen Bohrverfahren üblicherweise zwischen 10⁵ und 10⁷ Liter des Prozessfluids der vorliegenden Erfindung als Bohrspülung benötigt.

Die Erdkruste ist die äußerste, feste Schale der Erde und kann sich bis zu einer Tiefe von etwa 100km erstrecken, im Durchschnitt etwa bis zu einer Tiefe von 35km. Die oberste Schicht der Erdkruste bildet üblicherweise der Erdboden, mit einer üblichen Tiefe von etwa 10m-20m. Darunter liegt eine Vielzahl an geologischen Formationen mit unterschiedlichen Mächtigkeiten. Im Allgemeinen nimmt die Temperatur der Erdkruste mit jedem Kilometer Tiefe um etwa 25°C-30°C zu, mit erheblichen lokalen Abweichungen.

Beispielsweise finden sich geothermische Lagerstätten, die durch Tiefengeothermie gefördert werden sollen, oft in einer Tiefe von 1-3km, so dass die Temperatur dort üblicherweise etwa 25°-90°C betragen kann; somit spielen, je nach lokaler Begebenheit, mesophile, thermophile und/oder hyperthermophile Mikroorganismen vor allem bei der Tiefengeothermie eine Rolle. In einem Kilometer Tiefe sind Temperaturen von über 50°C, ein Porendruck von über 30 MPa und pH-Werte von weniger als 6 zu erwartende Umweltbedingungen. Auch halophile oder halotolerante Mikroorganismen spielen, je nach lokaler Begebenheit, vor allem bei der Tiefengeothermie eine Rolle.

Neben den in den jeweiligen Tiefen ansässigen Mikroorganismen muss mitunter auch das Wachstum von Mikroorganismen bekämpft werden, die z.B. durch das Einpumpen des Prozessfluids in die geothermische Bohrung selbst in die jeweilige Tiefe eingebracht wurden.

Im Folgenden werden die, vor allem in der Tiefengeothermie, unerwünschten Mikroorganismen beschrieben: Die unerwünschten Mikroorganismen sind ausgewählt aus der Gruppe Bakterien, Pilze (Fungi) und Archaeen, bevorzugt sind sie ausgewählt aus der Gruppe der Bakterien. Es sind insbesondere Mikroorganismen (vor allem Bakterien) unerwünscht, welche eines oder mehrere der folgenden produzieren: Säure, extrazelluläre polymere Substanzen (z.B. in Biofilmen) und Sulfide. Insbesondere Sulfidproduzenten sind unerwünscht, unter anderem wegen der entstehenden Geruchsbelästigung, gesundheitlicher Bedenken, und der von den entstehenden Sulfiden verursachten Korrosion.

Vorzugsweise sind die unerwünschten Mikroorganismen Bakterien. Sie gehören bevorzugt zur Abteilung der Firmicutes, Actinobacteria, Bacteroidetes oder Proteobacteria, insbesondere zur Abteilung der Firmicutes oder Actinobacteria. Außerdem gehören sie bevorzugt einer der folgenden Gattungen an: *Pseudomonas, Cobetia, Shewanella, Thermoanaerobacter, Arcobacter, Pseudoalteromonas, Marinobacterium, Halolactibacillus (auch bekannt als Halolactobacillus), Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Halolactibacillus* und *Halanaerobium.*

Bei den Archaeen sind insbesondere die Gattungen *Methanosarcinales, Methanohalophilus* und *Methanolobus* unerwünscht.

Es hat sich im Zuge der Erfindung herausgestellt, dass das erfindungsgemäße Prozessfluid mit dem Biostabilisator wirksam gegen viele dieser unerwünschten Mikroorganismen ist, bevorzugt gegen viele der Firmicutes oder Actinobacteria, insbesondere gegen sulfidproduzierende Firmicutes. Besonders überraschend war, dass das erfindungsgemäße Prozessfluid mit dem Biostabilisator wirksam gegen Bakterien, ausgewählt aus den Gattungen *Dietzia, Microbacterium, Halolactibacillus* und *Halanaerobium,* war.

Insbesondere gegen Vertreter von *Halolactibacillus* ist das erfindungsgemäße Prozessfluid wirksam. Es ist davon auszugehen, dass herkömmliche, umweltschädliche Biozide - im Gegensatz zum Biostabilisator gemäß der vorliegenden Erfindung - unzureichend gegen *Halolactibacillus* wirksam sind.

Zur Gattung *Halolactibacillus* gehören beispielsweise *H. halophilus* und *H. miurensis.* Der Biostabilisator gemäß der vorliegenden Erfindung ist insbesondere gegen diese beiden Arten wirksam.

Insbesondere auch gegen *Halanaerobium* wirken bisher eingesetzte Biozide nur unzureichend. Zur Gattung *Halanaerobium* gehört beispielsweise *Halanaerobium congolense,* das z.B. bei einer Massenkonzentration von 10 % NaCl und 45°C unter anaeroben Bedingungen gut wächst, und das Thiosulfat bzw. Schwefelverbindungen zu Sulfiden reduzieren kann, was zu unerwünschter Geruchsentwicklung führt. Auch *Halanaerobium praevalens* ist insbesondere nicht erwünscht.

Die besagten organischen Säuren bzw. Bestandteile, die besagte organische Säuren beinhalten, sind an sich bekannt aus unter anderem den Dokumenten WO 00/053814 A1, WO 01/88205 A1, WO 2004/081236 A1 und WO 2008/067578 A1. Alle in jenen Dokumenten beschriebenen Herstellungsverfahren bzw. Herrichtungsverfahren, insbesondere für Hopfenextrakt, natürliches Harz oder Myristinsäure, oder einem Salz davon, sind bevorzugt im Sinne der vorliegenden Erfindung.

Hopfensäuren sind Inhaltsstoffe der unbefruchteten Blütenstände weiblicher Hopfenpflanzen. Diese bitter schmeckenden Hopfenbestandteile werden seit Jahrhunderten zur Herstellung von lagerfähigem Bier genutzt und haben somit sogar in die menschliche Ernährung Eingang gefunden. Die Umweltverträglichkeit, insbesondere bei den hierin vorgeschlagenen Endkonzentrationen, ist somit gegeben.

Die Hopfenpflanze *Humulus lupulus* gehört zur botanischen Familie der *Cannabiaceae;* Hopfen wird in vielen Ländern kultiviert und bei der Herstellung von Bier verwendet. Unbefruchtete weibliche Hopfenpflanzen bilden die so genannten Hopfendolden, in denen das Hopfenharz vorliegt. Das Hopfenharz wiederum enthält verschiedenste biostabilisierende Substanzen. Die Hopfenbestandteile können mit Hilfe von Ethanol oder überkritischem CO₂ extrahiert werden.

Die aus dem Hopfenharz gewinnbaren Hopfenbitterstoffe beinhalten verschiedene Fraktionen, wie Humulone (alpha-Säuren) und Lupulone (beta-Säuren). Diese Substanzen weisen mikrobiologische Hemmwirkung auf und können durch Erhitzen in ihre Isoformen überführt werden, wodurch bessere Wasserlöslichkeit bei nach wie vor vorhandener Hemmwirkung auf unerwünschte Mikroorganismen gegeben ist. Zur Erhöhung der Löslichkeit und Verhinderung der Niederschlagsbildung bei der Lagerung ist es mitunter günstig, Myristinsäure zu geringen Anteilen als technischen Hilfsstoff bereits bei der Herstellung beizugeben. Beispiele von geeigneten Hopfensäuren finden sich auch in der WO 00/053814 A1.

Auch bei vielen Fettsäureverbindungen handelt es sich um physiologisch unbedenkliche Naturprodukte. Die Umweltverträglichkeit insbesondere bei den hierin vorgeschlagenen Endkonzentrationen ist somit gegeben. Die Fettsäure-Verbindungen gemäß der vorliegenden Erfindung können auch Fettsäurealkohole oder Fettsäurealdehyde sein. Die Fettsäure-Verbindungen können dabei auch modifiziert, etwa durch den Einbau von funktionellen Gruppen, wie-OH,-SH,-NH₂,-F,-Cl,-Br,-I u. dgl. sein (ausgenommen solche Derivate, die für Menschen, Tiere, oder Pflanzen toxisch sind); auch aliphatische Seitenketten und/oder ein oder mehrere (insbesondere zwei oder drei) (ungesättigte) Doppelbindungen sind möglich, solange die physiko-chemischen Eigenschaften der (aliphatischen) Grundkette, insbesondere die Löslichkeit in biostabilisierenden Konzentrationen, sowie die Struktur am Cl-Atom erhalten bleiben. Die biostabilisierende Wirkung von Fettsäuren ist beispielsweise aus der WO 2004/081236 A1 bekannt. Generell haben Versuche gezeigt, dass in der Regel die freien Fettsäuren und deren Seifen im Sinne der vorliegenden Erfindung eine bessere antimikrobielle Wirksamkeit aufweisen als deren Aldehyde oder Ester. Besonders die Myristinsäure bzw. -seife hat sich erfindungsgemäß besonders bewährt, vor allem was ihre antimikrobielle Aktivität anbelangt.

Baumharze von Pinien/Kiefern beispielsweise sowie das daraus durch Destillation gewonnene Kolophonium, welches zum größten Teil aus Harzsäuren besteht, weisen bakterizide Eigenschaften auf, welche für die menschliche Ernährung bereits seit Jahrhunderten genutzt werden. Die Umweltverträglichkeit insbesondere bei den hierin vorgeschlagenen Endkonzentrationen ist somit gegeben.

Vorzugsweise werden die Harzsäuren bzw. das Harz aus Kiefern gewonnen. Kiefern, wie die österreichische Schwarzföhre *Pinus nigra Austriaca,* gehören zur botanischen Familie der Kieferngewächse oder *Pinaceae;* sie sind vornehmlich auf der Nordhalbkugel weit verbreitet und ihre Harze haben bei der Herstellung von Retsina, dem griechischen geharzten Wein, eine lange Tradition. Zur Gewinnung der biostabilisierend wirksamen Bestandteile wird das Kiefernharz vorzugsweise mittels Destillation in die beiden Fraktionen Terpentinöl und Kolophonium aufgetrennt. Im Kolophonium liegen nun die wirksamen Bestandteile, ein Gemisch aus Harzsäuren, vor. Diese können mit Alkalien zu Alkali-Resinaten gelöst werden.

Kolophonium ist ein Gemisch aus aromatischen Verbindungen wie Abietinsäure, Dehydroabietinsäure und deren Isomere. Diese so genannten Harzsäuren, welche in Form von festen Kolophoniumblöcken kommerziell erwerbbar sind, entfalten zu unterschiedlichen Graden biostabilisierende Aktivität und können als wasserlösliche Alkali-Resinate eingesetzt werden. Zur Erhöhung der Löslichkeit und Verhinderung der Niederschlagsbildung der Harzseife bei der Lagerung ist es günstig Myristinsäure zu geringen Anteilen als technischen Hilfsstoff bereits bei der Herstellung beizugeben.

Erfindungsgemäß können sämtliche lebensmittelkompatiblen Harze, wie sie beispielsweise in "Ullmann's Encyclopedia of Industrial Chemistry", Vol. A 23 (1993), Seiten 73-88, beschrieben sind, eingesetzt werden, wie beispielsweise Baumharze, insbesondere Balsame, wie z.B. Benzoe, Kiefernbalsam, Myrrhe und Tolu-balsam. Aus Gründen der Wirtschaftlichkeit werden erfindungsgemäß vor allem Kolophonium-Produkte und Derivate bevorzugt. Derartige Produkte sind beispielsweise in Ullmann's Encyclopedia of Industrial Chemistry, Vol. A 23 (1993), auf den Seiten 79-88 beschrieben.

Unter anderem wegen der weiter oben beschriebenen, überraschenden biostabilisierenden Wirkung im Hinblick auf ausgewählte mesophile, thermophile, hyperthermophile, halotolerante und/oder halophile Bakterien, insbesondere der Abteilung Firmicutes oder Actinobacteria, ist das Prozessfluid der vorliegenden Erfindung in einer bevorzugten Ausführungsform für eine geothermische Bohrung für die Tiefengeothermie vorgesehen. Insbesondere ist das erfindungsgemäße Prozessfluid für eine geothermische Bohrung für ein Hot-Dry-Rock-Verfahren vorgesehen.

Im Zuge der vorliegenden Erfindung hat sich herausgestellt, dass das erfindungsgemäße Prozessfluid auch dann besonders gut biostabilisierend in Hinblick auf hierin genannte unerwünschte Mikroorganismen wirkt, wenn Biopolymere wie beispielsweise Polysaccharide, insbesondere Stärke und modifizierte Stärken, als Gelbildner enthalten sind. Diese Biopolymere sind durch mikrobielle Zersetzung z.B. in der geothermischen Bohrung sehr gefährdet. Andererseits kann eine (gewollte) Zersetzung der dem Prozessfluid zugesetzten Bestandteile wie beispielsweise den Biopolymeren und/oder den erfindungsgemäßen Biostabilisatoren nach einer gewissen Zeit erwünscht sein. Beides lässt sich mit der vorliegenden Erfindung realisieren, weil die Abbaubarkeit dieser Stoffe - wegen ihrer prinzipiellen Unbedenklichkeit und ihrer grundsätzlichen biologischen Abbaubarkeit - in einem gewissen Umfang steuerbar ist.

Daher ist das erfindungsgemäße Prozessfluid in einer bevorzugten Ausführungsform dadurch gekennzeichnet, dass es ferner zumindest einen Gelbildner enthält, wobei der Gelbildner ein Biopolymer oder ein polymeres Derivat davon ist; vorzugsweise wobei das Biopolymer ein Polysaccharid, bevorzugt eine Stärke, ein Pflanzengummi, insbesondere Xanthan, eine Cellulose, insbesondere polyanionische Cellulose, oder ein Pektin, insbesondere eine Stärke, ist. Im Sinne der Erfindung ist in dieser Ausführungsform unter anderem jede dem Fachmann als zweckmäßig erscheinende Derivatisierung des Biopolymers möglich; allerdings muss die gelbildende Eigenschaft des Biopolymers im Wesentlichen erhalten bleiben oder - im Hinblick auf die Abbaubarkeit - steuerbar bzw. kontrollierbar sein. Bevorzugte Biopolymere bzw. Derivatisierungen werden auch in der WO 2012/045711 A1, US 4,659,811, WO 2006/109225, US 5,681,796, US 4,964,604, US 4,169,798 oder der US 6,810,959 offenbart, oder in ausgewählten der weiter oben zitierten Schriften.

In einer weiteren bevorzugten Ausführungsform der Erfindung wird das erfindungsgemäße Prozessfluid als Bohrspülung in der geothermischen Bohrung eingesetzt, d.h. das Prozessfluid ist eine Bohrspülung. Dafür hat sich das erfindungsgemäße Prozessfluid als besonders geeignet herausgestellt (vgl. Beispiel 1B).

Im erfindungsgemäßen Prozessfluid können weitere Bestandteile enthalten sein, unter anderem Bestandteile, die für eine Bohrspülung, oder eine andere Verwendung, in der Geothermie bzw. der Tiefengeothermie typisch sind, oder jegliche andere Bestandteile, die der Fachmann zur Verwendung in einer geothermischen Bohrung als zweckmäßig erachten könnte. Vorzugsweise sind ein oder mehrere Stoffe enthalten, ausgewählt aus den folgenden Gruppen: Gelbildner, insbesondere solche wie zwei Absätze weiter oben beschrieben; Puffermittel, insbesondere ausgewählt aus Essigsäure, Fumarsäure, Kaliumcarbonat, Borax, Natriumacetat, Natron, Natriumcarbonat, Natriumhydroxid; und Tonmineralien, insbesondere Bentonit, in feinkörniger Form (z.B. gemahlen). Beispiel 1A zeigt ein erfindungsgemäßes Prozessfluid, dass erfolgreich als Bohrspülung in einer geothermischen Bohrung eingesetzt wurde.

Überraschenderweise hat sich herausgestellt, dass es vorteilhaft ist, wenn im erfindungsgemäßen Prozessfluid, insbesondere wenn es als Bohrspülung verwendet wird, ein Entschäumer enthalten ist (vgl. Beispiel 1B). Bevorzugt ist dieser Entschäumer auf Basis von nicht-ionischen Tensiden, beispielsweise auf Fettalkoholalkoxylat-Basis oder Alkylenoxidpolymer-Basis. Ein geeignetes Produkt ist beispielsweise BASOPUR® DF 5 von BASF SE.

Bevorzugt umfasst das Prozessfluid der vorliegenden Erfindung Wasser.

Überraschend hat sich im Zuge der vorliegenden Erfindung herausgestellt, dass das Prozessfluid der vorliegenden Erfindung, wenn Wasser enthalten ist oder hinzugefügt wird, umso besser biostabilisierend in Hinblick auf hierin genannte unerwünschte Mikroorganismen wirkt, je weicher das Wasser ist oder gemacht wird. Besonders gut biostabilisierend wirkt das erfindungsgemäße Prozessfluid, wenn die Wasserhärte höchstens 20 °dH (deutsche Härtegrade) bzw. 3,57 mmol/l (Erdalkaliionen) beträgt, bevorzugt höchstens 15 °dH bzw. 2,67 mmol/l, mehr bevorzugt höchstens 10 °dH bzw. 1,78 mmol/l, noch mehr bevorzugt höchstens 7,5 °dH bzw. 1,34 mmol/l, insbesondere höchstens 5 °dH bzw. 0,89 mmol/l. Durch die erfindungsgemäße Verwendung des Prozessfluids, insbesondere in der Tiefengeothermie, können Erdalkaliionen in Lösung gebracht werden, was eine höhere Wasserhärte mit sich bringt.

Deshalb ist das Prozessfluid der vorliegenden Erfindung in einer bevorzugten Ausführungsform dadurch gekennzeichnet, dass es ferner einen Wasserenthärter umfasst. Alle dem Fachmann als zweckmäßig erscheinenden Wasserenthärter sind geeignet. Bevorzugt ist der Wasserenthärter ein Kationentauscher oder ein Chelator, insbesondere ausgewählt aus: Zeolithen (z.B. Zeolith A), anorganischen Polyphosphaten (z.B. Triphosphat), Ethylendiamintetraessigsäure und deren Salzen, Nitrilotriessigsäure und deren Salzen, Polyacrylaten, und Zitrat (bzw. Zitronensäure).

Es hat sich herausgestellt, dass das erfindungsgemäße Prozessfluid besonders gut biostabilisierend in Hinblick auf hierin genannte unerwünschte Mikroorganismen wirkt, wenn mehrere der genannten organischen Säuren darin enthalten sind. Dadurch ergibt sich ein synergistischer Effekt in Hinblick auf die biostabilisierende Wirkung. Daher betrifft eine weitere bevorzugte Ausführungsform der vorliegenden Erfindung das erfindungsgemäße Prozessfluid, ferner dadurch gekennzeichnet, dass der Biostabilisator ein Gemisch umfasst, vorzugsweise ist, aus:
- zumindest einer Hopfensäure, oder einem Salz, Alkohol oder Aldehyd davon, und zumindest einer Fettsäure, oder einem Salz, Alkohol oder Aldehyd davon, oder
- zumindest einer Harzsäure, oder einem Salz, Alkohol oder Aldehyd davon, und zumindest einer Fettsäure, oder einem Salz, Alkohol oder Aldehyd davon, oder
- zumindest einer Hopfensäure, oder einem Salz, Alkohol oder Aldehyd davon, und zumindest einer Harzsäure, oder einem Salz, Alkohol oder Aldehyd davon, und zumindest einer Fettsäure, oder einem Salz, Alkohol oder Aldehyd davon;
insbesondere wobei der Biostabilisator ein Gemisch ist aus zumindest einer Hopfensäure, oder einem Salz, Alkohol oder Aldehyd davon, und zumindest einer Harzsäure, oder einem Salz, Alkohol oder Aldehyd davon, und zumindest einer Fettsäure, oder einem Salz, Alkohol oder Aldehyd davon.

Im Zuge der vorliegenden Erfindung hat sich ein Biostabilisator, der zumindest eines ausgewählt aus Hopfenextrakt, ein natürliches Harz (insbesondere Kolophonium) und Myristinsäure bzw. ein Salz davon enthält, überraschend als besonders wirkungsvoll in Hinblick auf hierin genannte unerwünschte Mikroorganismen herausgestellt. Folglich ist das Prozessfluid der vorliegenden Erfindung in einer besonders bevorzugten Ausführungsform dadurch gekennzeichnet, dass der Biostabilisator ein Gemisch ist aus mindestens einem, bevorzugt mindestens zwei, insbesondere allen, der folgenden Bestandteile: Hopfenextrakt, natürliches Harz, bevorzugt Kolophonium, wobei das natürliche Harz vorzugsweise in gelöster Form zugegeben ist, und Myristinsäure oder einem Salz davon. Eine weitere besonders bevorzugte Ausführungsform betrifft das erfindungsgemäße Prozessfluid, das ferner dadurch gegenzeichnet ist, dass der Biostabilisator erhältlich ist durch Zugabe von mindestens einem, bevorzugt mindestens zwei, insbesondere allen, der folgenden Bestandteile: Hopfenextrakt, natürliches Harz, bevorzugt Kolophonium, wobei das natürliche Harz vorzugsweise in gelöster Form zugegeben wird, und Myristinsäure oder einem Salz davon.

Vorzugsweise ist Hopfensäure für die vorliegende Erfindung eine alpha-Hopfensäure, ausgewählt aus der Gruppe bestehend aus Humulon, Isohumulon, Cohumulon, Adhumulon, Prähumulon, Posthumulon, Tetrahydroisohumulon und Tetrahydrodeoxyhumulon, oder eine beta-Hopfensäure, ausgewählt aus der Gruppe bestehend aus Lupulon, Colupulon, Adlupulon, Prälupulon, Postlupulon, Hexahydrocolupulon und Hexahydrolupulon, weil sie zur Biostabilisierung geeignet sind.

Vorzugsweise ist die Harzsäure für die vorliegende Erfindung ausgewählt aus der Gruppe bestehend aus Pimarsäure, Neoabietinsäure, Abietinsäure, Dehydroabietinsäure, Levopimarsäure und Palustrinsäure, weil sie zur Biostabilisierung geeignet sind.

Vorzugsweise ist die Fettsäure für die vorliegende Erfindung ausgewählt aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure, weil sie zur Biostabilisierung geeignet sind. Besonders bevorzugt ist Myristinsäure.

Untersuchungen im Laufe der vorliegenden Erfindungen haben Konzentrationsbereiche der Biostabilisator-Komponenten ergeben, die besonders geeignet zur Biostabilisierung hinsichtlich unerwünschter Mikroorganismen sind. Somit betrifft eine weitere bevorzugte Ausführungsform der vorliegenden Erfindung das erfindungsgemäße Prozessfluid, dadurch gekennzeichnet, dass:
- die Gesamtkonzentration der Hopfensäuren im Prozessfluid 0,01-1000 ppm beträgt, bevorzugt 0,05-100 ppm, mehr bevorzugt 0,1-10 ppm, insbesondere 0,5-5 ppm; und/oder
- die Gesamtkonzentration der Harzsäuren im Prozessfluid 0,05-5000 ppm beträgt, bevorzugt 0,25-500 ppm, mehr bevorzugt 0,5-50 ppm, insbesondere 0,25-25 ppm; und/oder
- die Gesamtkonzentration der Fettsäuren im Prozessfluid 0,05-5000 ppm beträgt, bevorzugt 0,25-500 ppm, mehr bevorzugt 0,5-50 ppm, insbesondere 0,25-25 ppm.

Vorzugsweise bezieht sich "ppm" ("parts per million") dabei auf den Anteil der jeweiligen organischen Säure(n) (in mg) an der Gesamtmasse des Prozessfluids (in kg), d.h. ppm steht für mg/kg.

Bei den genannten Konzentrationen handelt es sich um Biostabilisator-Endkonzentrationen, das heißt, das Prozessfluid kann mit den genannten Biostabilisator-Endkonzentrationen in die geothermische Bohrung eingepumpt werden und dort, neben der technischen Wirkung für die jeweilige spezifische Anwendung, seine biostabilisierende Wirkung entfalten. Insbesondere mit diesen Endkonzentrationen ist das Prozessfluid umweltverträglich.

In ausgewählten Situationen ist es erforderlich, das biostabilisierende Wirkungsspektrum des Prozessfluids der vorliegenden Erfindung zu verbreitern bzw. zusätzliche biozide Effekte damit zu erzielen. Darum ist das erfindungsgemäße Prozessfluid in einer weiteren bevorzugten Ausführungsform dadurch gekennzeichnet, dass es ferner mindestens einen weiteren antimikrobiellen Wirkstoff und/oder Biostabilisator beinhaltet, vorzugsweise ausgewählt aus Essigsäure, Milchsäure, Propionsäure, Benzoesäure, Sorbinsäure, Ameisensäure, und Salzen davon; auch Chitosan und Chitosan-Derivate, wie beispielsweise in der WO 2012/149560 A2 offenbart, sind bevorzugt.

In einem weiteren Aspekt der vorliegenden Erfindung wird die Verwendung des erfindungsgemäßen Prozessfluids in einer geothermischen Bohrung, bevorzugt für die Tiefengeothermie, insbesondere für ein Hot-Dry-Rock-Verfahren offenbart. In einer bevorzugten Ausführungsform werden mindestens 10⁴ L, bevorzugt mindestens 10⁵ L, insbesondere mindestens 10⁶ L des erfindungsgemäßen Prozessfluids verwendet. Vorzugsweise wird dabei durch den Biostabilisator des Prozessfluids ein unerwünschter Mikroorganismus im Wachstum und/oder im Stoffwechsel gehemmt, der ein Bakterium ist, bevorzugt ausgewählt aus der Abteilung der Firmicutes, Actinobacteria, Bacteroidetes oder Proteobacteria, insbesondere der Abteilung der Firmicutes oder Actinobacteria. Dieser unerwünschte Mikroorganismus gehört ferner bevorzugt einer Gattung von Bakterien an, die ausgewählt ist aus *Pseudomonas, Cobetia, Shewanella, Thermoanaerobacter, Arcobacter, Pseudoalteromonas, Marinobacterium, Halolactibacillus, Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Dietzia, Microbacterium, Halolactibacillus* und *Halanaerobium.*

In einer weiteren bevorzugten Ausführungsform wird das erfindungsgemäße Prozessfluid in einer Tiefe von 100 m - 8000 m, bevorzugt von 200 m - 7000 m, mehr bevorzugt von 300 m - 6000 m, noch mehr bevorzugt von 400 m - 5000 m, insbesondere von 500 m - 4000 m oder gar 600 m - 3500 m eingesetzt.

Das erfindungsgemäße Prozessfluid wird bevorzugt als Bohrspülung eingesetzt.

Ein weiterer Aspekt der vorliegenden Erfindung betrifft ein Verfahren zur Biostabilisierung einer geothermischen Bohrung, bevorzugt für die Tiefengeothermie, insbesondere für ein Hot-Dry-Rock-Verfahren, umfassend das Einpumpen des Prozessfluids in die Bohrung. In einer bevorzugten Ausführungsform werden mindestens 10⁴ L, bevorzugt mindestens 10⁵ L, insbesondere mindestens 10⁶ L des erfindungsgemäßen Prozessfluids in die geothermische Bohrung gepumpt.

In einer weiteren bevorzugten Ausführungsform des Verfahrens zur Biostabilisierung einer geothermischen Bohrung wird das erfindungsgemäße Prozessfluid in einer Tiefe von 100 m - 8000 m, bevorzugt von 200 m - 7000 m, mehr bevorzugt von 300 m - 6000 m, noch mehr bevorzugt von 400 m - 5000 m, insbesondere von 500 m - 4000 m oder gar 600 m - 3500 m in der geothermischen Bohrung eingesetzt. Das erfindungsgemäße Prozessfluid in diesem Verfahren wird bevorzugt als Bohrspülung eingesetzt.

Vorzugsweise wird im erfindungsgemäßen Verfahren zur Biostabilisierung durch den Biostabilisator des Prozessfluids ein unerwünschter Mikroorganismus im Wachstum und/oder im Stoffwechsel gehemmt, der ein Bakterium ist, bevorzugt ausgewählt aus der Abteilung der Firmicutes, Actinobacteria, Bacteroidetes oder Proteobacteria, insbesondere der Abteilung der Firmicutes oder Actinobacteria. Dieser unerwünschte Mikroorganismus gehört ferner bevorzugt einer Gattung von Bakterien an, die ausgewählt ist aus *Pseudomonas, Cobetia, Shewanella, Thermoanaerobacter, Arcobacter, Pseudoalteromonas, Marinobacterium, Halolactibacillus, Selenihalanaerobacter, Vibrio, Desulfovibrio, Burkholderia, Arcobacter, Dietzia, Microbacterium, Idiomarina, Marinobacter, Halomonas* und *Halanaerobium,* mehr bevorzugt einer Gattung ausgewählt aus *Dietzia, Microbacterium, Halolactibacillus* und *Halanaerobium.* In einem weiteren Aspekt der vorliegenden Erfindung wird ein Verfahren zur Herstellung des erfindungsgemäßen Prozessfluids offenbart, wobei das Prozessfluid Wasser beinhaltet. Das Verfahren umfasst die Zugabe mindestens einer organischen Säure oder eines Salzes, Alkohols oder Aldehyds davon, zum Wasser oder einem Wasser beinhaltenden Teil des Prozessfluids, wobei die mindestens eine organische Säure ausgewählt ist der Gruppe bestehend aus Hopfensäuren, Harzsäuren, Fettsäuren und Gemischen zweier oder aller davon. In einer bevorzugten Ausführungsform werden mindestens 10⁴ L, bevorzugt mindestens 10⁵ L, insbesondere mindestens 10⁶ L des erfindungsgemäßen Prozessfluids hergestellt.

Sofern das erfindungsgemäße Prozessfluid eine Harzsäure beinhaltet, ist es äußerst wirtschaftlich, dass diese in Form eines Harzes oder eines Destillats davon zugegeben wird, insbesondere Kolophonium. Folglich ist, wenn mindestens eine Harzsäure zugegeben wird, das erfindungsgemäße Herstellungsverfahren in einer bevorzugten Ausführungsform dadurch gekennzeichnet, dass die mindestens eine Harzsäure in Form eines Harzes, vorzugsweise eines natürlichen Harzes, noch mehr bevorzugt in Form von Kolophonium, zugegeben wird. In einer weiteren Ausführungsform ist es günstig, wenn dabei ein gelöstes, emulgiertes bzw. dispergiertes oder pastöses Kiefernharzprodukt eingesetzt wird, vorzugsweise auf Basis von Kiefernharz, Kiefernbalsam, Kiefernharzsäuren, Salzen der Kiefernharzsäuren (Harzseifen), nicht-denaturierten Derivaten von Kiefernharzen (d.h. Derivate, die ohne Einfluss von starken Säuren oder Basen erhalten werden), eingesetzt. Als Kolophoniumderivate werden erfindungsgemäß bevorzugt auch chemisch-synthetisierte oder aus Kolophoniumprodukten isolierte Einzelkomponenten des Kolophoniums verstanden, wie beispielsweise Levopimarsäure, Neoabietinsäure, Palustrinsäure, Abietinsäure, Dehydroabietinsäure, Tetrahydroabietinsäure, Dihydroabietinsäure, Pimarsäure und Isopimarsäure. Die Derivatisierung von Kolophonium kann im Sinne der Erfindung weiters die Hydrierung, Polymerisierung, Additionsreaktionen, Veresterung, Nitrilierung, Aminierung, etc. vorsehen. In den in diesem Absatz genannten Ausführungsformen ist besonders bevorzugt, wenn der jeweilige harzsäurehältige Bestandteil (z.B. das Harz oder ein Destillat davon) als alkoholische Lösung oder Suspension, vorzugsweise als eine 1 bis 95%ige, insbesondere als eine 10 bis 80%ige Ethanollösung, oder als alkalische Lösung, vorzugsweise als 0,5% bis 35%ige alkalische Lösung zugegeben wird (auch die mindestens eine Fettsäure kann in alkalischer Lösung wie eben beschrieben zugegeben werden).

Ebenfalls kann es zweckmäßig sein, im erfindungsgemäßen Herstellungsverfahren, wenn mindestens eine Harzsäure und/oder Fettsäure zugegeben wird, dass die mindestens eine Harzsäure und/oder Fettsäure als salzhaltige Lösung oder Suspension zugegeben wird, vorzugsweise als Kaliumsalzlösung, insbesondere als 0,5 bis 35%ige Kaliumsalzlösung.

Aus wirtschaftlichen Gründen ist, wenn mindestens eine Hopfensäure im Herstellungsverfahren zugegeben wird, die Zugabe der mindestens einen Hopfensäure in Form eines Hopfenextrakts zu bevorzugen. Die Herstellung von Hopfenextrakt selbst ist seit langem bekannt, üblicherweise findet die Extraktion aus unbefruchteten Blütenstände weiblicher Hopfenpflanzen mit Alkohol, v.a. Ethanol, als Lösungsmittel statt oder, bevorzugterweise durch Extraktion mit überkritischem CO₂. Weitere bevorzugte Varianten der Zugabe von Hopfenextrakt sind in der WO 00/053814 A1 offenbart.

In einer weiteren bevorzugten Ausführungsform der vorliegenden Erfindung umfasst das erfindungsgemäße Herstellungsverfahren ferner die Zugabe eines weiteren antimikrobiellen Wirkstoffs oder Stabilisators zum Wasser oder einem Wasser beinhaltenden Teil des Prozessfluids, vorzugsweise ausgewählt aus Essigsäure, Milchsäure, Propionsäure, Benzoesäure, Sorbinsäure, Ameisensäure und deren Salzen. Auch die Zugabe von Chitosan und Chitosan-Derivaten, wie beispielsweise in der WO 2012/149560 A2 offenbart, ist bevorzugt.

Weitere bevorzugte Merkmale des erfindungsgemäßen Herstellungsverfahrens sind in den Dokumenten WO 00/053814 A1, WO 01/88205 A1, WO 2004/081236 A1 oder WO 2008/067578 A1 offenbart.

Das erfindungsgemäße Prozessfluid kann beispielsweise eine Flüssigkeit, ein Gel oder ein flüssiger Schaum sein. Bevorzugt umfasst das Prozessfluid Wasser. Bevorzugt ist das Prozessfluid eine Flüssigkeit oder ein Gel.

Weiters ist bevorzugt, dass der Biostabilisator des erfindungsgemäßen Prozessfluids, insbesondere in Wasser bzw. im wasserbeinhaltenden Teil des Prozessfluids, gelöst ist - der Biostabilisator kann beispielsweise aber auch, ganz oder teilweise, in Suspension oder Emulsion im erfindungsgemäßen Prozessfluid vorliegen.

Unter einem Biostabilisator wird ein Stoff verstanden, der das Wachstum (insbesondere die Vermehrung) und/oder den Stoffwechsel von Mikroorganismen wie Bakterien, Archaeen oder Pilzzellen verlangsamen oder hemmen kann. Im Gegensatz dazu wird unter einem Biozid ein Stoff verstanden, der Mikroorganismen abtötet. In dieser Hinsicht wirkt ein Biozid aggressiver als ein Biostabilisator. Für den Fachmann ist evident, dass ein Biostabilisator unter besonderen Umständen auch als Biozid wirken kann (z.B. bei hoher Dosierung, bei sehr anfälligen Mikroorganismen usw.).

Die biostabilisierende Wirkung einer Substanz lässt sich auf viele verschiedene Arten messen, die im Stand der Technik bekannt sind. Unter anderem mit Methoden, wie sie in den hierin zitierten Dokumenten offenbart sind. Bevorzugte Methoden zur Bestimmung der biostabilisierenden Wirkung sind Microdilution-Test, Tüpfeltest oder Well Diffusion Test. Ebenso sind in White et al. oder in Jorgensen und Ferraro offenbarte Methoden bevorzugt.

Für die Messung der biostabilisierenden Wirkung wird die Substanz oft bis zu einer oder mehreren bestimmten Konzentrationen (z.B. 0,1 ppm, 0,5 ppm, 1 ppm, 5 ppm, 10 ppm, 25 ppm, 50 ppm, 100 ppm, 200 ppm, 300 ppm, 400 ppm, 500 pm, 1000 ppm, 5000 ppm, 10000 ppm) zu einer Probe zugegeben, wobei die Probe den lebenden unerwünschten Mikroorganismus umfasst und beispielsweise eine Reinkultur, Mischkultur, eine aus der Erdkruste gezogene Probe oder eine Probe sein kann, die einer aus der Erdkruste gezogenen Probe ähnlich ist (z.B. Klärschlamm). Dann kann die biostabilisierende Wirkung der Substanz bestimmt werden, indem die Probe mit der Substanz nach einer oder mehreren bestimmten Zeiten (z.B. 1 d, 2 d, 3 d, 4 d, 5 d, 10 d, 20 d, 30 d, 60 d, 90 d, 120 d) mit sich selbst zum Anfangszeitpunkt und/oder mit einer Kontrolle (die Probe ohne die Substanz, z.B. mit Wasser anstelle der Substanz) verglichen wird. Dieser Vergleich kann ein direkter Vergleich sein, z.B.: Ermitteln der Keimzahl durch Ausplattieren und Bestimmung der KBE/mL (kolonie-bildende Einheiten) oder Messung der Trübung (z.B. Bestimmung der OD600). Dieser Vergleich kann auch ein indirekter Vergleich sein, z.B. die Messung eines unerwünschten Effekts, der durch den unerwünschten Mikroorganismus verursacht werden kann (z.B. Sulfidproduktion, Säureproduktion, Produktion extrazellulärer polymerer Substanzen). Insbesondere in der Tiefengeothermie kann die Verringerung der mikrobiellen Sulfidproduktion ein wichtiger Parameter sein, um die Eignung einer Substanz als Biostabilisator festzustellen. Ein Biostabilisator hat bevorzugt einen oder mehrere der genannten Wirkungen bei ausgewählten unerwünschten Mikroorganismen, wie sie hierin genannt sind: Geringere Zunahme der Biomasse als in der Kontrolle, geringere Sulfidproduktion als in der Kontrolle, geringere Säureproduktion als in der Kontrolle, geringere Produktion extrazellulärer polymerer Substanzen als in der Kontrolle, geringere Biofilmproduktion als in der Kontrolle.

Laut Brock Biology of Microorganisms, S. 138, werden die Begriffe mesophil, thermophil, hyperthermophil, halotolerant und halophil wie folgt verstanden:
mesophil: bezieht sich auf einen Mikroorganismus, der zwischen 20°C und 45°C am besten wächst; thermophil: bezieht sich auf einen Mikroorganismus, der zwischen 45°C und 80°C am besten wächst; hyperthermophil: bezieht sich auf einen Mikroorganismus, der bei 80°C und höher am besten wächst; halotolerant: bezieht sich auf einen Mikroorganismus, der bei hohen Salzkonzentrationen (z.B. Massenkonzentration von 25% NaCl) wachsen kann; halophil: bezieht sich auf einen Mikroorganismus, der hohe Salzkonzentrationen (z.B. eine Massenkonzentration von 25% NaCl) zum Wachstum benötigt.

Die vorliegende Erfindung wird anhand der nachfolgenden Figuren und Beispiele, auf die sie selbstverständlich nicht eingeschränkt ist, näher erläutert.

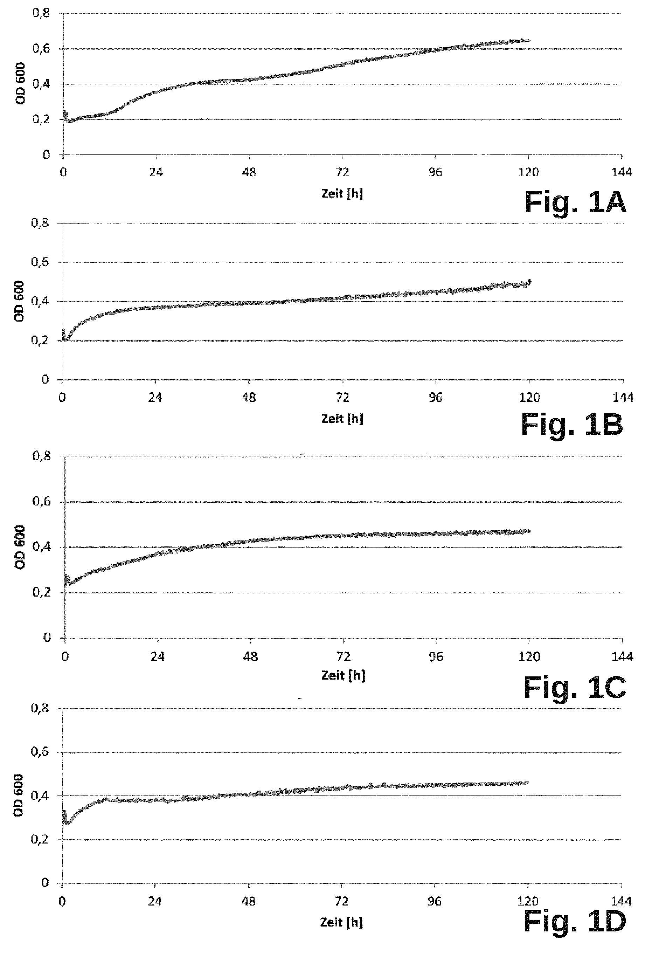

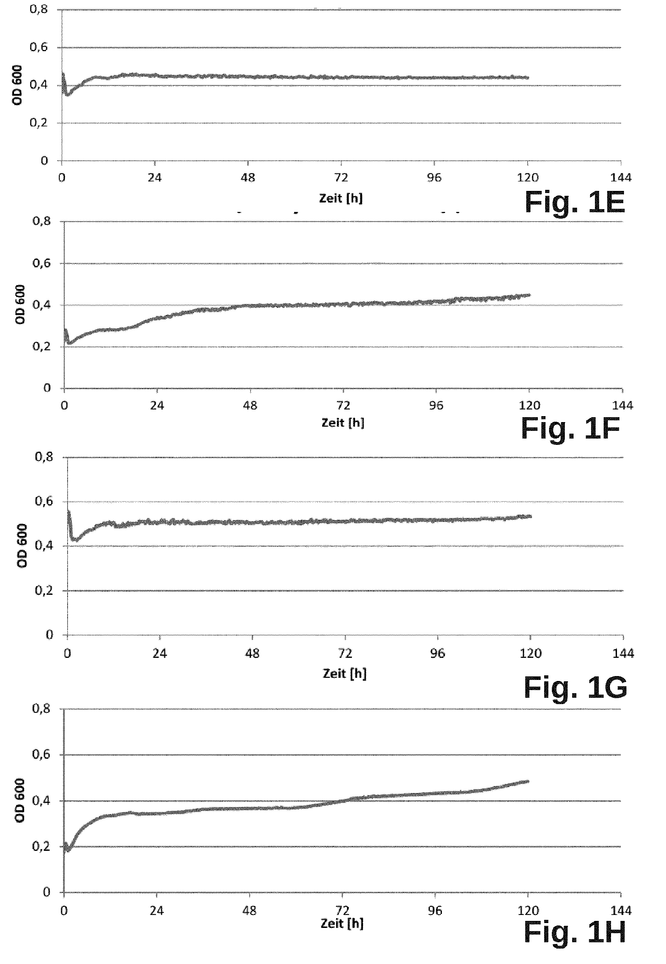

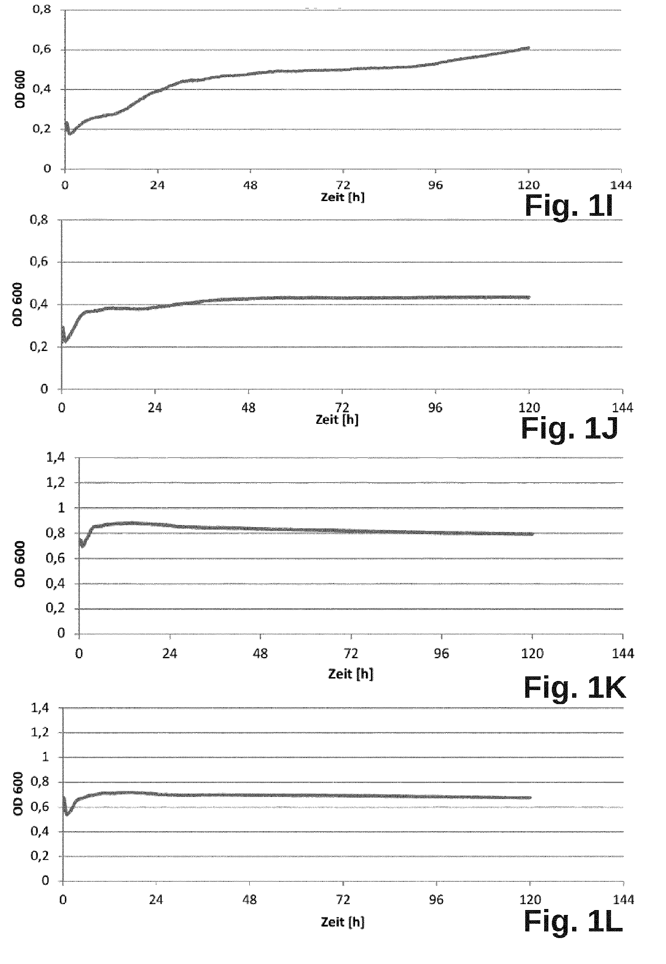

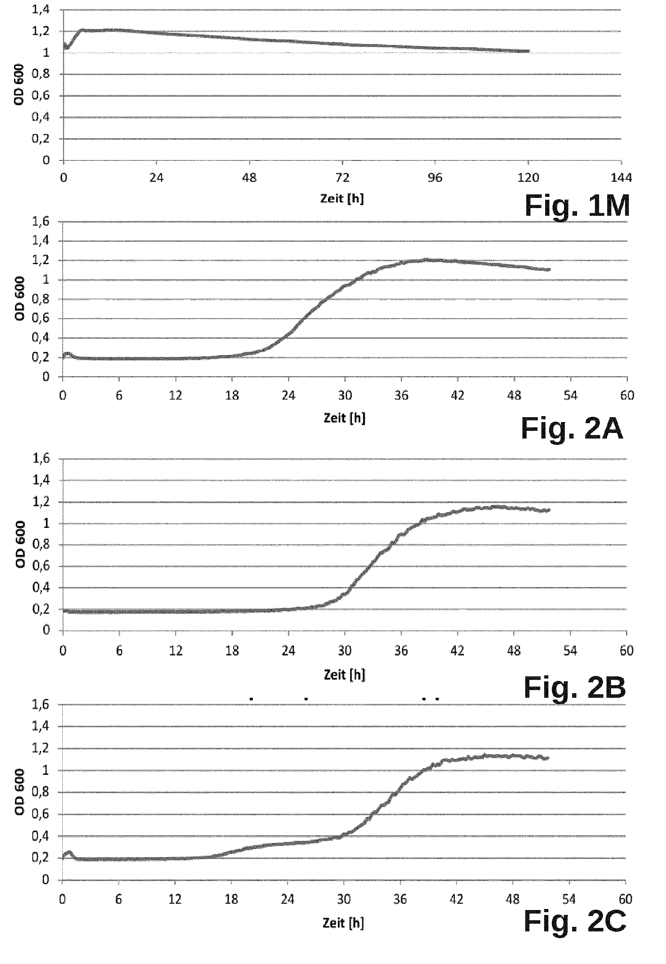

Figuren 1A-1M: Wirkung des Biostabilisators auf *Halanaerobium congolense.* Der Stamm DSM 11287 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.

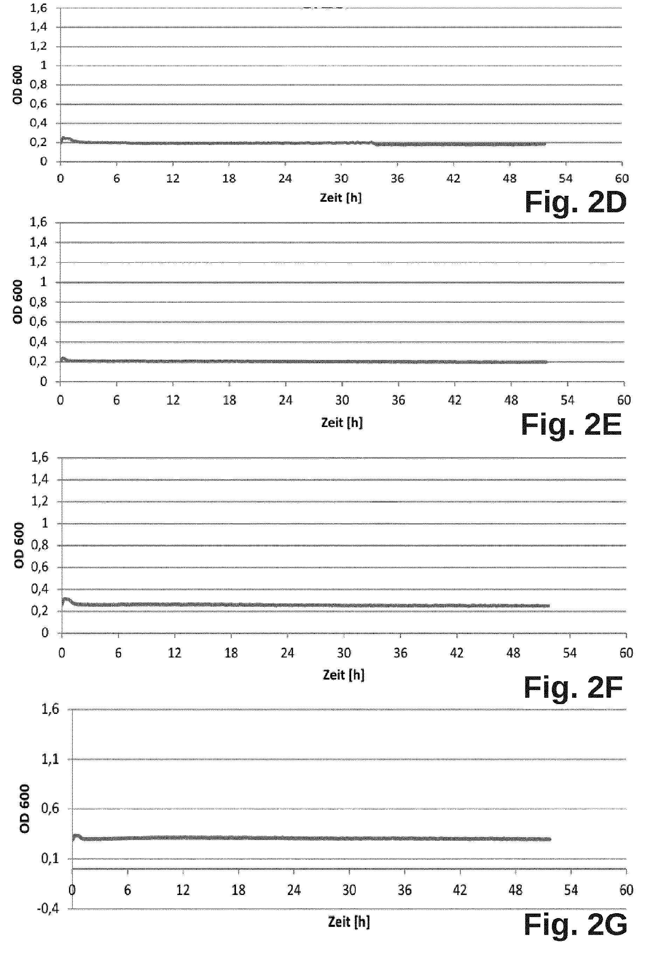

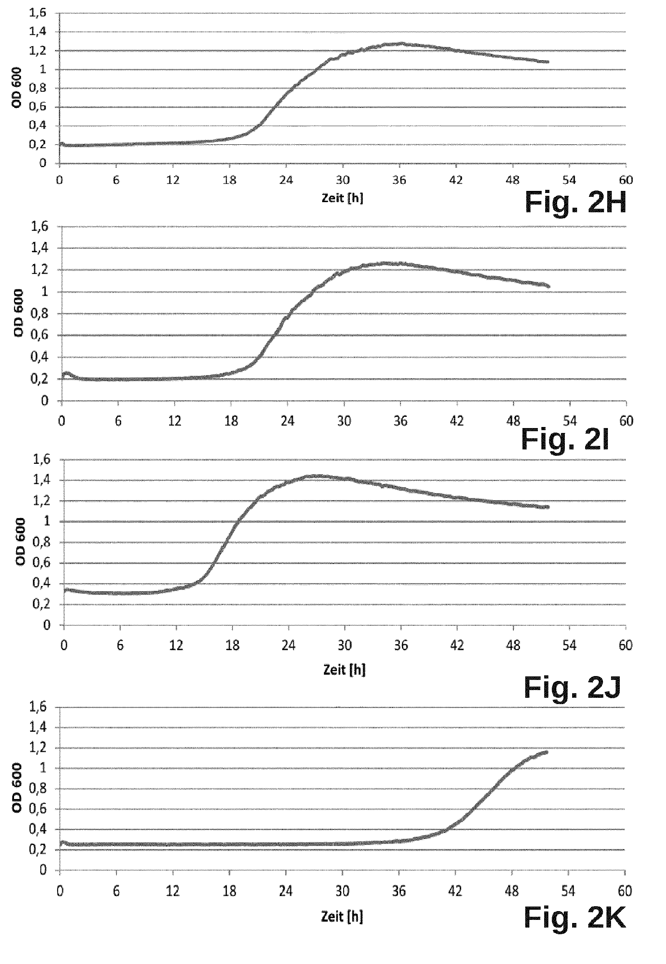

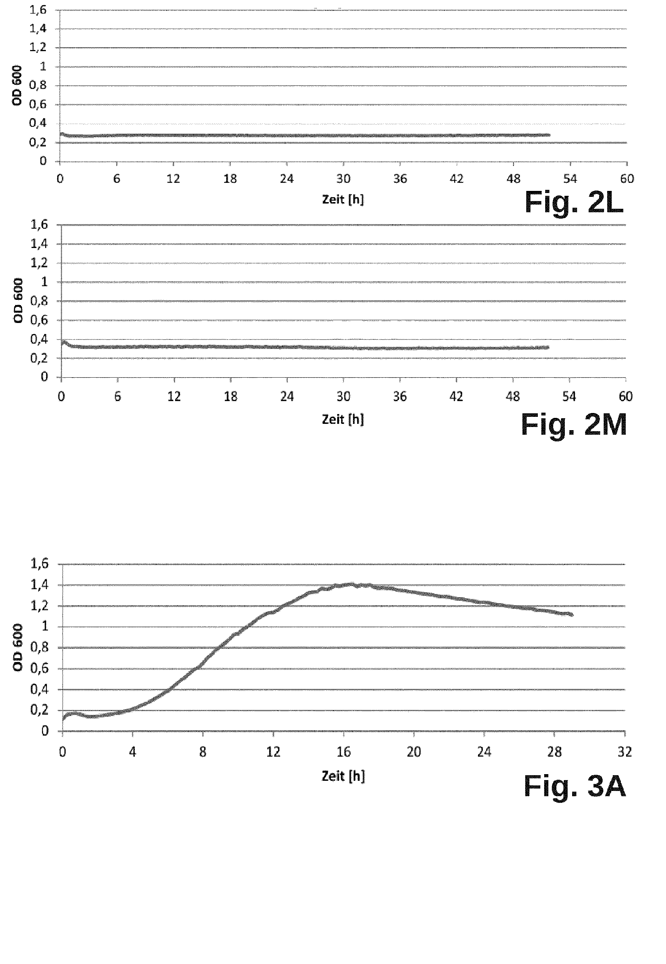

Figuren 2A-2M: Wirkung des Biostabilisators auf *Halolactibacillus miurensis.* Der Stamm DSM 17074 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.

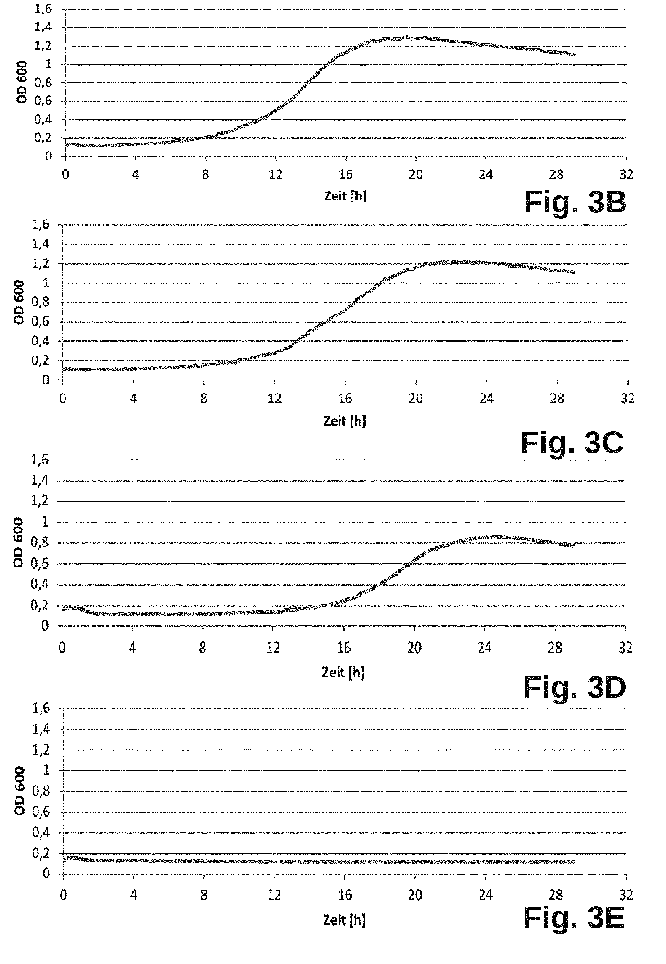

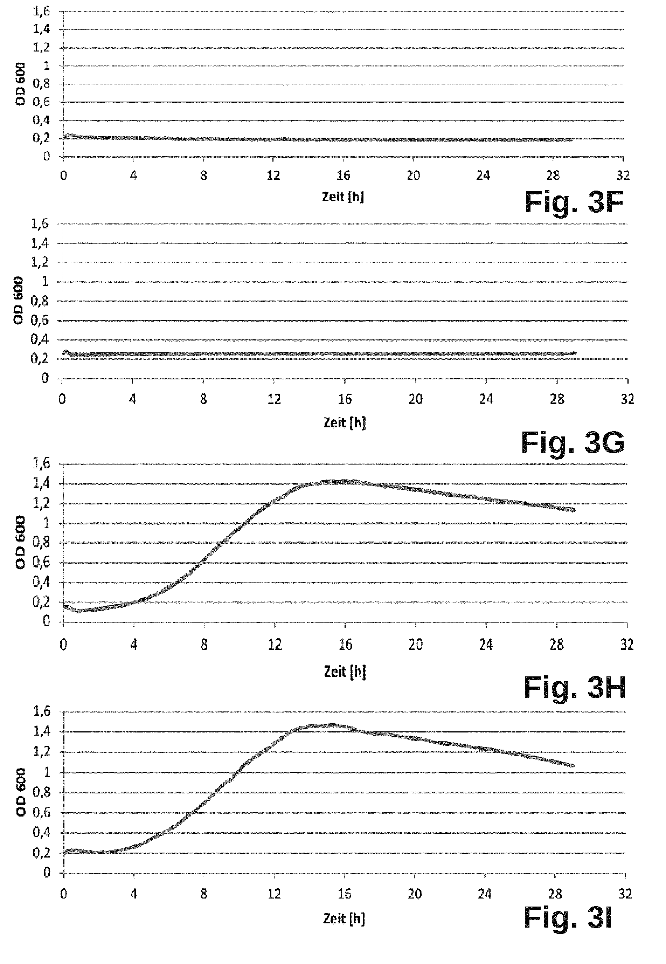

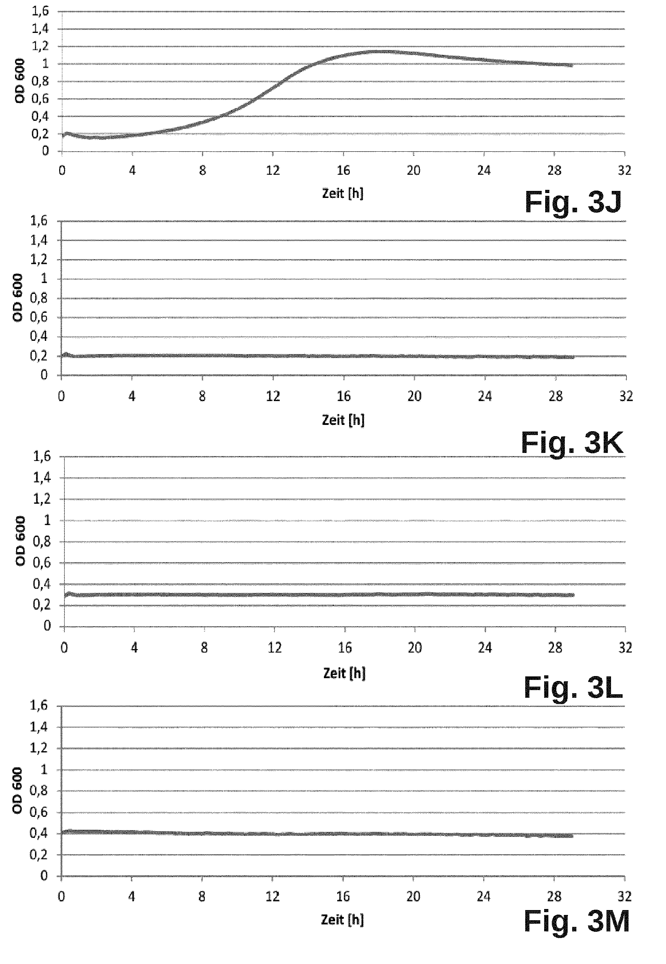

Figuren 3A-3M: Wirkung des Biostabilisators auf *Halolactibacillus halophilus.* Der Stamm DSM 17073 wurde gemäß Beispiel 4 dem Biostabilisator A (Hopfensäuren) bzw. dem Biostabilisator B (Harzsäuren/Myristinsäure) in verschiedenen Konzentrationen ausgesetzt. Gezeigt wird die (A) Wachstumskurve ohne Biostabilisator; Wachstumskurve bei (B) 0,5 ppm, (C) 1 ppm, (D) 10 ppm, (E) 50 ppm, (F) 100 ppm, (G) 250 ppm Biostabilisator A; und Wachstumskurve bei (H) 0,5 ppm, (I) 1 ppm, (J) 10 ppm, (K) 50 ppm, (L) 100 ppm, (M) 250 ppm Biostabilisator B. Der dosisabhängige Trend zur Biostabilisierung ist klar ersichtlich.

### Beispiele

### Beispiel 1A

### Herstellung des erfindungsgemäßen Prozessfluids als Bohrspülung für eine geothermische Bohrung

Für eine geothermische Bohrung wurden 750.000 L Prozessfluid mit Biostabilisator als Bohrspülung bereitgestellt:
Zu 720.000 L Wasser wurden die folgenden Stoffe hinzugefügt: Hopfensäureextrakt als Biostabilisator (700 kg einer 10%igen alkalischen Hopfensäurelösung für eine Hopfensäure-Konzentration von 1 g/L). 61.000 kg Kaliumcarbonat zur Inhibierung von erbohrten Feststoffen; 18.000 kg polyanionische Cellulose (PAC) und 2.250 kg Xanthan.

Ferner wurden die folgenden Stoffe hinzugefügt: 4.000 kg Zitronensäure, 1.500 kg Soda, 3.000 kg Bentonit, und 720 L Entschäumer auf Fettalkoholoxylat-Basis.

### Beispiel 1B

### Erfindungsgemäße Verwendung des Prozessfluids zur Bohrspülung bei einer geothermischen Bohrung

Bei Anwendung einer Bohrspülung mit Biostabilisator gemäß Beispiel 1A bei einer geothermischen Bohrung in einer Bohrtiefe von 750 - 3.200 m konnte die mikrobiologische Belastung signifikant reduziert werden und die nachteiligen Auswirkungen wie Geruchsentwicklung, Viskositätsänderung der Bohrspülung oder Abbau von Xanthan verhindert werden.

Die mikrobiologischen Untersuchungen wurden auf Platecount-Agar durch Ausstreichen von 100 µL Bohrspülprobe und zwei Tage Bebrütung bei 37°C durchgeführt (mikrobiologische Belastung wird in KbE = koloniebildende Einheiten pro mL Bohrspülung angegeben) :
- Tag 1 Beginn des zweiten Bohrungsabschnitts (750 m Tiefe). Bohrspülung gemäß Beispiel 1A, jedoch ohne Biostabilisator und Entschäumer kam zum Einsatz
- Tag 11 Probenentnahme aus Bohrspülung - Bakterienwachstum überwucherte Agar, KbE daher nicht genau zu ermitteln, aber sicher weit mehr als 3000. Unter anderem war in der Probe ein signifikanter Anteil an Bakterien der Gattungen *Microbacterium* und *Dietzia* vorhanden, wie durch Sequenzierung festgestellt wurde.
Die Bohrspülung gemäß Beispiel 1A mit Biostabilisator jedoch ohne Entschäumer wurde nun eingesetzt. Unerwarteterweise zeigte sich, dass der Einsatz eines Entschäumers vorteilhaft war, so dass nach kurzer Zeit die Bohrspülung gemäß Beispiel 1A (also mit Biostabilisator und Entschäumer) zum Einsatz kam.
- Tag 18 > 300 KbE/mL
- Tag 21 93 KbE/mL
- Tag 29 13 KbE/mL
- Tag 37 14 KbE/mL
- Tag 43 19 KbE/mL
- Tag 50 18 KbE/mL
- Tag 61 Ende der Bohrung
Somit hat sich überraschenderweise herausgestellt, dass das Prozessfluid mit Biostabilisator gemäß der Erfindung auch als Bohrspülung in einer geothermischen Bohrung effektiv ist, insbesondere auch gegen Bakterien der Gattungen *Microbacterium* und *Dietzia.*

### Beispiel 2

### Biostabilisierende Wirkung auf Halanaerobium

Zubereitung des Wachstumsmediums:
Spurenelemente-Stammlösung: Nitrilotriessigsäure 1,50 g in 1L destilliertem Wasser aufnehmen, pH auf 6,5 mit KOH einstellen. Dann zugeben: MgSO₄ x 7 H₂O 3 g, MnSO₄ x H₂O 0,50 g, NaCl 1 g, FeSO₄ x 7 H₂O 0,10 g, CoSO₄ x 7 H₂O 0, 18 g, CaCl₂ x 2 H₂O 0,10 g, ZnSO₄ x 7 H₂O 0,18 g, CuSO₄ x 5 H₂O 0,01 g, KA1 (SO₄)2 x 12 H₂O 0,02 g, H₃BO₃ 0,01 g, Na₂MoO₄ x 2 H₂O 0,01 g, NiCl₂ x 6 H₂O 0, 03 g, Na₂SeO₃ x 5 H₂O 0,30 mg und Na₂WO₄ x 2 H₂O 0,40 mg. pH mit KOH auf 7 einstellen.
Mediumgrundlage: NH₄Cl 1 g, K₂HPO₄ 0, 3 g, KH₂PO₄ 0, 3 g, MgCl₂ x 6 H₂O 10 g, CaCl₂ x 2 H₂O 0,1 g, KCl 1 g, Na-Acetat 0,5 g, Cystein 0,5 g, Trypticase 1 g, Hefeextrakt 1 g, NaCl 100 g, Spurenelemente-Stammlösung 1 mL und Resazurin 0,001 g in 1L destilliertem Wasser aufnehmen.

Die Mediumgrundlage abkochen, unter N₂:CO₂ (80:20 v/v) abkühlen. Unter N₂:CO₂ (80:20 v/v) in Kulturröhrchen aliquotieren und autoklavieren. Zur sterilen Mediumgrundlage folgende sterile Stammlösungen auf die in Klammer angegebenen Konzentrationen zugeben: 2% Na₂S x 9 H₂O (0.2 mL/10 mL), 10% NaHCO₃ (0.2 mL/10 mL), 1M Glucose (0.2 mL/10 mL) and 1M Natriumthiosulfat (0.2 mL/10 mL). pH gegebenenfalls auf 7 einstellen. So wird das Wachstumsmedium erhalten.

*Halanaerobium congolense* (DSM 11287) wird von der Deutschen Sammlung von Mikroorganismen und Zellkulturen (DSMZ) bezogen. Bei 42°C unter anaeroben Bedingungen im Wachstumsmedium eine Vorkultur heranziehen, wobei für 7 Tage inkubiert wird.

5 Kulturröhrchen (R0-R4) mit je 2mL Wachstumsmedium bereitstellen, wobei dem Wachstumsmedium im jeweiligen Kulturröhrchen Biostabilisator (in Form von Hopfenextrakt, Kolophonium in Kaliumsalzlösung und Myristinsäure in Kaliumsalzlösung) bis zu den folgenden Konzentrationen beigefügt wird:

| Röhrchen | Hopfensäuren [ppm] | Harzsäuren [ppm] | Myristinsäure [ppm] |
|---|---|---|---|
| R0 | 0 | 0 | 0 |
| R1 | 5 | 25 | 25 |
| R2 | 20 | 100 | 100 |
| R3 | 100 | 500 | 500 |
| R4 | 200 | 1000 | 1000 |

Die Röhrchen mit jeweils 20 µL Vorkultur beimpfen und nach 1, 2, 3 und 4 Tagen Inkubation bei den oben genannten Wachstumsbedingungen die optische Dichte (OD) bestimmen. Es zeigt sich eine geringere optische Dichte im Vergleich zu R0, wobei die Dichte-Differenz zu R0 mit höherer BiostabilisatorKonzentration zunimmt. Zusätzlich kann noch die Menge an jeweils produziertem H₂S bestimmt werden.

### Beispiel 3

### Biostabilisierende Wirkung auf Halolactibacillus

### Zubereitung des Wachstumsmediums:

Pepton 5 g, Hefeextrakt 5 g, Glucose 10 g, KH₂PO₄ 1 g, MgSO₄ x 7 H₂O 0,2 g, NaCl 40 g, Na₂CO₃ 10 g in 1L destilliertem Wasser aufnehmen. pH gegebenenfalls auf 9,6 einstellen.

*Halolactibacillus halophilus* (DSM 17073) wird von der Deutschen Sammlung von Mikroorganismen und Zellkulturen (DSMZ) bezogen. Bei 30°C im Wachstumsmedium eine Vorkultur heranziehen, wobei für 3 Tage inkubiert wird.

5 Kulturröhrchen (R0-R4) mit je 2 mL Wachstumsmedium bereitstellen, wobei dem Wachstumsmedium im jeweiligen Kulturröhrchen Biostabilisator (in Form von Hopfenextrakt, Kolophonium in Kaliumsalzlösung und Myristinsäure in Kaliumsalzlösung) bis zu den folgenden Konzentrationen beigefügt wird:

| Röhrchen | Hopfensäuren [ppm] | Harzsäuren [ppm] | Myristinsäure [ppm] |
|---|---|---|---|
| R0 | 0 | 0 | 0 |
| R1 | 5 | 25 | 25 |
| R2 | 20 | 100 | 100 |
| R3 | 100 | 500 | 500 |
| R4 | 200 | 1000 | 1000 |

Die Röhrchen mit jeweils 20 µL Vorkultur beimpfen und nach 1, 2, 3 und 4 Tagen Inkubation bei den oben genannten Wachstumsbedingungen die optische Dichte bestimmen. Es zeigt sich eine geringere optische Dichte im Vergleich zu R0, wobei die Dichte-Differenz zu R0 mit höherer BiostabilisatorKonzentration zunimmt.

### Beispiel 4

### Biostabilisierende Wirkung auf Halanaerobium und Halolactibacillus

Die Wirkung ausgewählter Biostabilisatoren (Hopfen-β-Säuren bzw. Harzsäuren/Myristinsäure, Biostabilisator A bzw. B) auf das Wachstum von drei definierten Bakterienstämmen (*Halanerobium congolense* DSM 11287, *Halolactibacillus halophilus* DSM 17073, *Halolactibacillus miurensis* DSM 17074) wurde mittels eines in-vitro Versuches analysiert.

Folgende wässrige Stammlösungen für die ausgewählten Biostabilisatoren wurden verwendet: (A) 10%ige alkalische β-Hopfensäurelösung (Hopfenextrakt) und (B) 20%ige alkalische Lösung von Harzsäuren (Kolophonium) und Myristinsäure (60:40).

**Tabelle 1 - Kultivierungsbedingungen**

| **Stamm** | **Wachstumsmedium** | **Umweltbedingungen** |
|---|---|---|
| *Halanaerobium congolense* DSM 11287 | DSMZ Medium Nr. 933 (wie in Beispiel 2) | 3 Tage, anaerob, 42°C |
| *Halolactibacillus miurenis* DSM 17074 | DSMZ Medium Nr. 785 (wie in Beispiel 3) | 48 h, mikroaerophil, 30°C |
| *Halolactibacillus halophilus* DSM 17073 | DSMZ Medium Nr. 785 (wie in Beispiel 3) | 48 h, mikroaerophil, 30°C |

Jeder der drei Teststämme wurde einige Tage vor den Biostabilisierungsversuchen gemäß Tabelle 1 angezüchtet. Die Speziesidentität wurde per Sequenzierung und Sequenzvergleich in öffentlichen Datenbanken noch einmal überprüft.

Die Biostabilisierungsversuche wurden mit dem Bioscreen-Gerät durchgeführt. Es handelt sich dabei um ein spezielles Mikrotiterplattenphotometer, welches gleichzeitig als Inkubator dient und bis zu zwei sogenannte Honeycomb-Mikrotiterplatten mit je 100 Wells gleichzeitig aufnehmen kann. Die Bestimmung des Wachstums erfolgt über eine OD-Messung bei 600 nm. Während der Inkubation wurden die Honeycomb-Mikrotiterplatten alle 15 sec vor der jeweiligen Messung mit mittlerer Stärke für 5 sec geschüttelt. Die OD-Messung erfolgte alle 15 min.

Bei jedem der durchgeführten Versuche wurden pro Teststamm zwei Honeycomb-Mikrotiterplatten verwendet, welche jeweils nach demselben Schema befüllt wurden. Auf der jeweils ersten Mikrotiterplatte wurde dabei der Biostabilisator A und auf der jeweils zweiten Platte der Biostabilisator B in den Konzentrationen 0,5 ppm, 1 ppm, 10 ppm, 50 ppm, 100 ppm und 250 ppm getestet. Die Konzentrationsangaben in ppm in diesem Beispiel beziehen sich auf die Endkonzentration an Hopfensäuren im Wachstumsmedium (für A) bzw. auf die Endkonzentration an Harzsäuren/Myristinsäure im Wachstumsmedium (in der Zusammensetzung 60:40, für B). "ppm" steht in diesem Beispiel für mg der organischen Säuren (d.h. Hopfensäuren bzw. Harzsäuren/Myristinsäure) pro kg der Lösung (d.h. Wachstumsmedium + Zusätze).

Alle Teststämme wurden bei jeder angeführten Biostabilisatorkonzentration siebenfach getestet (d.h. n=7). Dazu wurde die jeweiligen Biostabilisatorkonzentrationen mit dem jeweiligen Bakterienstamm in sieben Wells der Honeycomb-Mikrotiterplatte parallel untersucht. Zusätzlich wurden drei Wells pro Biostabilisatorkonzentration als Kontrolle mitgeführt d.h. anstelle der Bakteriensuspension wurde steriles Wasser in die Wells pipettiert. Daneben wurden zur weiteren Kontrolle auf jeder Platte sieben Wells ohne Biostabilisator mitgeführt, um das typische Wachstum des jeweiligen Stammes unter den gewählten Testbedingungen zu erfassen. Die Sterilitätskontrolle umfasste jeweils weitere drei Wells pro Biostabilisator und Bakterienstamm (Medium ohne Biostabilisator und ohne Bakteriensuspension).

In jedes Well wurde das jeweilige Wachstumsmedium gemäß Tabelle 1, Bakteriensuspension (bzw. steriles Wasser bei den entsprechenden Kontrollen) und die Biostabilisatorlösung in der entsprechenden Konzentration pipettiert. Um eine strikt anaerobe Atmosphäre für *Halanaerobium congolense* zu schaffen, wurde das Wachstumsmedium mit Oxyrase (Sauerstoff-entfernendes Enzym) versetzt. Durch Mischung aller Komponenten wurden die jeweils gewünschten Biostabilisatorkonzentrationen erreicht. Anschließend wurden alle Wells mit 2 - 3 Tropfen sterilem Paraffinöl überschichtet. Dies diente der Erhaltung der anaeroben Bedingungen bei *Halanaerobium congolense* und der Schaffung mikroaerophiler Verhältnisse für *Halolactibacillus miurensis* und *Halolactibacillus halophilus.*
Zusammensetzung des jeweiligen Volumens in den Wells der Mikrotiterplatte (für *Halanaerobium congolense*)
300 µL 1,25x Wachstumsmedium (DSMZ Nr. 933)
50 µL Bakteriensuspension
10 µL Oxyrase® (Oxyrase Inc., Ohio, USA)
10 µL Biostabilisatorlösung entsprechender Konzentration
2 - 3 Tropfen Paraffin zum Überschichten
Zusammensetzung des jeweiligen Volumens in den Wells der Mikrotiterplatte (für die anderen drei Stämme)
300 µL 1,25x Wachstumsmedium (DSMZ Nr. 785 bzw. CASO)
50 µL Bakteriensuspension
10 µL µL Biostabilisatorlösung entsprechender Konzentration
2 - 3 Tropfen Paraffin zum Überschichten

Die jeweiligen Wachstumskurven sind in den Figuren dargestellt und zeigen eine starke, konzentrationsabhängige Beeinflussung des Wachstums der Teststämme durch die Biostabilisatoren. Bei höheren Konzentrationen der Biostabilisatoren kommt es zur Eintrübung des Wachstumsmediums (d.h. höherer Anfangs-OD-Wert - für die Bewertung der biostabilisierenden Wirkung relevant ist jedoch nicht der Anfangs-OD-Wert, sondern der Verlauf der Wachstumskurve bzw. der OD-Zugewinn) und vereinzelt zu Ausreißern (weil der Biostabilisator mitunter aus der Lösung ausfällt), wobei der dosisabhängige Trend zur Biostabilisierung dennoch klar aus den Figuren erkennbar ist.

In den meisten getesteten Biostabilisator-Teststamm Kombinationen bewirkt bereits eine Konzentration von 0,5 ppm eine Beeinflussung des Wachstums (geringerer OD-Zugewinn bzw. verzögertes Erreichen der maximalen OD). Eine vollständige Hemmung des Wachstums (d.h. es findet kein die OD steigerndes Wachstum mehr statt) trat stammindividuell meist bei 10 ppm bzw. 50 ppm Biostabilisatorkonzentration auf (vgl. Tabelle 2).

Unter den Testbedingungen waren die Biostabilisatoren A und B in der Lage, das Wachstum der getesteten Bakterien zu hemmen, d.h. biostabilisierend zu wirken.

**Tabelle 2 - Biostabilisatormindestkonzentration für vollständige Wachstumshemmung. A: Hopfensäuren, B: Harzsäuren/Myristinsäure (60:40)**

| **Stamm** | **Biostabilisator A [ppm]** | **Biostabilisator B [ppm]** |
|---|---|---|
| *Halanaerobium congolense* DSM 11287 | 10 | 100 |
| *Halolactibacillus miurenis* DSM 17074 | 50 | 10 |
| *Halolactibacillus halophilus* DSM 17073 | 1 | 250 |

Zitierte Nicht-Patent-Literatur:
Ashraf et al. "Green biocides, a promising technology: current and future applications to industry and industrial processes." Journal of the Science of Food and Agriculture 94.3 (2014): 388-403
Emerstorfer, Kneifel and Hein, "The role of plant-based antimicrobials in food and feed production with special regard to silage fermentation", Die Bodenkultur - Journal for Land Management, Food and Environment (2009), vol. 60, issue 3
Jorgensen and Ferraro, "Antimicrobial susceptibility testing: general principles and contemporary practices", Clinical Infectious Diseases 26, 973-980 (1998).
Madigan et al. "Brock Biology of Microorganisms", 10. Ausgabe (2003), insbesondere S. 138
Ullmann's Encyclopedia of Industrial Chemistry, Vol. A 23 (1993), S. 73-88.
Wang, Jifu, et al. "Robust antimicrobial compounds and polymers derived from natural resin acids." Chemical Communications 48.6 (2012): 916-918.
White, et al. "Antimicrobial resistance: standardisation and harmonisation of laboratory methodologies for the detection and quantification of antimicrobial resistance" Rev. sci. tech. Off. int. Epiz. 20 (3), 849-858 (2001).

## Patentansprüche

1. Verwendung eines Prozessfluids in einer geothermischen Bohrung, wobei das Prozessfluid einen Biostabilisator umfasst, der **dadurch gekennzeichnet ist, dass** der Biostabilisator mindestens eine organische Säure, oder ein Salz, Alkohol oder Aldehyd davon, umfasst, wobei die mindestens eine organische Säure ausgewählt ist aus der Gruppe bestehend aus Hopfensäuren, Harzsäuren, Fettsäuren und Gemischen davon.

2. Verwendung gemäß Anspruch 1, wobei das Prozessfluid als Bohrspülung in der geothermischen Bohrung eingesetzt wird.

3. Verwendung gemäß Anspruch 1 oder 2, **dadurch gekennzeichnet, dass** das Prozessfluid ferner zumindest einen Entschäumer umfasst, bevorzugt auf Basis von nicht-ionischen Tensiden.

4. Verwendung gemäß einem der Ansprüche 1 bis 3, **dadurch gekennzeichnet, dass** das Prozessfluid ferner zumindest einen Gelbildner enthält, wobei der Gelbildner ein Biopolymer oder ein polymeres Derivat davon ist;
vorzugsweise wobei das Biopolymer ein Polysaccharid, bevorzugt eine Stärke, ein Pflanzengummi, insbesondere Xanthan, eine Cellulose, insbesondere polyanionische Cellulose, oder ein Pektin ist.

5. Verwendung gemäß einem der Ansprüche 1 bis 4, **dadurch gekennzeichnet, dass** das Prozessfluid ferner einen Wasserenthärter umfasst.

6. Verwendung gemäß einem der Ansprüche 1 bis 5, **dadurch gekennzeichnet, dass** der Biostabilisator ein Gemisch umfasst, vorzugsweise ist, aus:
- zumindest einer Hopfensäure, oder einem Salz, Alkohol oder Aldehyd davon, und zumindest einer Fettsäure, oder einem Salz, Alkohol oder Aldehyd davon, oder
- zumindest einer Harzsäure, oder einem Salz, Alkohol oder Aldehyd davon, und zumindest einer Fettsäure, oder einem Salz, Alkohol oder Aldehyd davon, oder
- zumindest einer Hopfensäure, oder einem Salz, Alkohol oder Aldehyd davon, und zumindest einer Harzsäure, oder einem Salz, Alkohol oder Aldehyd davon, und zumindest einer Fettsäure, oder einem Salz, Alkohol oder Aldehyd davon;
insbesondere wobei der Biostabilisator ein Gemisch ist aus zumindest einer Hopfensäure, oder einem Salz, Alkohol oder Aldehyd davon, und zumindest einer Harzsäure, oder einem Salz, Alkohol oder Aldehyd davon, und zumindest einer Fettsäure, oder einem Salz, Alkohol oder Aldehyd davon.

7. Verwendung gemäß einem der Ansprüche 1 bis 6, **dadurch gekennzeichnet, dass** der Biostabilisator ein Gemisch ist aus mindestens einem, bevorzugt mindestens zwei, insbesondere allen, der folgenden Bestandteile:
- Hopfenextrakt,
- natürliches Harz, bevorzugt Kolophonium, wobei das natürliche Harz vorzugsweise in gelöster Form zugegeben ist, und
- Myristinsäure oder einem Salz davon.

8. Verwendung gemäß einem der Ansprüche 1 bis 7, **dadurch gekennzeichnet, dass** der Biostabilisator erhältlich ist durch Zugabe von mindestens einem, bevorzugt mindestens zwei, insbesondere allen, der folgenden Bestandteile:
- Hopfenextrakt,
- natürliches Harz, bevorzugt Kolophonium, wobei das natürliche Harz vorzugsweise in gelöster Form zugegeben wird, und
- Myristinsäure oder einem Salz davon.

9. Verwendung gemäß einem der Ansprüche 1 bis 8, wobei der Biostabilisator **dadurch gekennzeichnet ist, dass**:
- die Hopfensäure eine alpha-Hopfensäure ist, ausgewählt aus der Gruppe bestehend aus Humulon, Isohumulon, Cohumulon, Adhumulon, Prähumulon, Posthumulon, Tetrahydroisohumulon und Tetrahydrodeoxyhumulon, oder eine beta-Hopfensäure ist, ausgewählt aus der Gruppe bestehend aus Lupulon, Colupulon, Adlupulon, Prälupulon, Postlupulon, Hexahydrocolupulon und Hexahydrolupulon; und/oder
- die Harzsäure ausgewählt ist aus der Gruppe bestehend aus Pimarsäure, Neoabietinsäure, Abietinsäure, Dehydroabietinsäure, Levopimarsäure und Palustrinsäure; und/oder
- die Fettsäure ausgewählt ist aus der Gruppe bestehend aus Kaprinsäure, Undecylensäure, Laurinsäure, Myristinsäure, Palmitinsäure, Margarinsäure, Stearinsäure, Arachinsäure, Behensäure, Lignocerinsäure, Cerotinsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und Cervonsäure.

10. Verwendung gemäß einem der Ansprüche 1 bis 9, **dadurch gekennzeichnet, dass**:
- die Gesamtkonzentration der Hopfensäuren im Prozessfluid 0,01-1000 ppm beträgt, bevorzugt 0,05-100 ppm, mehr bevorzugt 0,1-10 ppm, insbesondere 0,5-5 ppm; und/oder
- die Gesamtkonzentration der Harzsäuren im Prozessfluid 0,05-5000 ppm beträgt, bevorzugt 0,25-500 ppm, mehr bevorzugt 0,5-50 ppm, insbesondere 0,25-25 ppm; und/oder
- die Gesamtkonzentration der Fettsäuren im Prozessfluid 0,05-5000 ppm beträgt, bevorzugt 0,25-500 ppm, mehr bevorzugt 0,5-50 ppm, insbesondere 0,25-25 ppm.

11. Verwendung gemäß einem der Ansprüche 1 bis 10, **dadurch gekennzeichnet, dass** es ferner mindestens einen weiteren antimikrobiellen Wirkstoff und/oder Biostabilisator beinhaltet, vorzugsweise ausgewählt aus Essigsäure, Milchsäure, Propionsäure, Benzoesäure, Sorbinsäure, Ameisensäure, und Salzen davon.

12. Verfahren zur Biostabilisierung einer geothermischen Bohrung, umfassend das Pumpen des Prozessfluids gemäß einem der Ansprüche 1 bis 10 in die geothermische Bohrung, vorzugsweise als Bohrspülung.

13. Prozessfluid, insbesondere Bohrspülung, für eine geothermische Bohrung, wie es in einem der Ansprüche 1 bis 11 definiert ist.

14. Prozessfluid, insbesondere Bohrspülung, gemäß Anspruch 13, ferner umfassend Tonmineralien, insbesondere Bentonit, wobei ferner auch der Entschäumer und vorzugsweise auch der Gelbildner umfasst ist.

15. Verfahren zur Herstellung des Prozessfluids gemäß Anspruch 13 oder 14, wobei das Prozessfluid Wasser beinhaltet, umfassend die Zugabe mindestens einer organische Säure oder einem Salz, Alkohol oder Aldehyd davon, zum Wasser oder einem Wasser beinhaltenden Teil des Prozessfluids, wobei die mindestens eine organische Säure ausgewählt ist der Gruppe bestehend aus Hopfensäuren, Harzsäuren, Fettsäuren und Gemischen zweier oder aller davon.
